# EUROPÄISCHE PATENTSCHRIFT

(11) **EP 1 814 956 B1**
(45) Veröffentlichungstag und Bekanntmachung des Hinweises auf die Patenterteilung: **23.12.2015**
(21) Anmeldenummer: 05802646.9
(22) Anmeldetag: 12.11.2005
(51) Int. Cl.: C09D 163/10, C09D 5/02

(54) **STRAHLUNGSH[RTBARE ZUSAMMENSETZUNGEN**
RADIATION CURABLE COMPOSITIONS
COMPOSITIONS DURCISSABLES PAR RAYONNEMENT

(30) Priorität: 22.11.2004 FR 0452704
(43) Veröffentlichungstag der Anmeldung: 08.08.2007
(73) Patentinhaber: IGM Group B.V., 5145 RM Waalwijk (NL)
(72) Erfinder: HÖFER, Rainer, 40477 Düsseldorf (DE); DRUENE, Laurence, F-77930 Perthes en Gatinais (FR); BALLIN, Jean-Marc, F-93160 Noisy le Grand (FR); GARINET, Morgan, F-77000 Vaux le Pénil (FR); IYER, Ramesh Dr., Harleysville, PA 19438 (US); IYER, Lakshmi, Harleysville, PA 19438 (US)
(74) Vertreter: Nederlandsch Octrooibureau
(86) Internationale Anmeldenummer: PCT/EP2005/012147
(87) Internationale Veröffentlichungsnummer: WO 2006/056331

(56) Entgegenhaltungen:
- EP-A- 0 562 860
- WO-A-95/18165
- WO-A-97/15615
- WO-A-02/085997
- WO-A1-2004/037935
- US-A- 4 446 258
- US-A- 4 636 541
- US-A- 5 792 827

## Beschreibung

### Gebiet der Erfindung

Die Erfindung betrifft spezielle strahlungshärtbare wäßrige Beschichtungs-Zusammensetzungen mit einem Gehalt an Epoxyacrylaten.

### Stand der Technik

WO 02/85997 beschreibt wäßrige Beschichtungs-Zusammensetzungen mit einem Gehalt an härtbaren Komponenten bestehend aus (A) 0,5 bis 90 Gew.-% in Wasser selbstdispergierenden bei 20 °C festen Epoxidharzen, (B) 0,5 bis 90 Gew.-% (Meth)acrylsäureestern eines Polyols, (C) 5,0 bis 99,0 Gew.-% Wasser und (D) 0 oder 0,1 bis 3 Gew.-% organischer Lösungsmittel mit folgenden Maßgaben: (i) die (Meth)actylsäureester (B) enthalten mindestens 2 reaktionsfähige (Meth)acrylgruppen pro Molekül, (ii) die Summe der Gewichtsprozente der Komponenten (A) bis (D) ergibt 100 Gew.-% und (iii) die Viskosität der Zusammensetzung (gemessen nach Brookfield bei 23 °C) beträgt weniger als 15000 mPas.

WO 00/02945 und WO 00/02944 **beschreiben in** Wasser selbstdispergierbare härtbare Epoxidharze sowie ein Verfahren zu ihrer Herstellung. Bei den Epoxidharzen handelt es sich um spezielle Verbindungen auf Basis α,β-ungesättigter Carbonsäureester. Weiterhin werden wäßrige Dispersionen mit einem Gehalt an diesen speziellen Epoxidharzen sowie die Verwendung dieser speziellen Epoxidharze zur Beschichtung fester Substrate, insbesondere zur Formulierung wasserbasierter Straßenmarkierungsfarben, beschrieben.

### Beschreibung der Erfindung

Aufgabe der vorliegenden Erfindung war es, strahlungshärtbare Beschichtungszusammensetzungen auf wäßriger Basis bereitzustellen. Diese Zusammensetzungen sollten allenfalls einen geringen Gehalt an organischen Lösungsmitteln aufweisen, vorzugsweise jedoch frei sein von organischen Lösungsmitteln. Die Zusammensetzungen sollten sich ferner durch gute Handhabbarkeit und Applizierbarkeit (= Einarbeitbarkeit in anwendungstechnisch brauchbare Systeme) auszeichnen. Die wässrigen Zusammensetzungen sollten sich zur Beschichtung und zum Bedrucken unterschiedlichster Substrate, insbesondere Holz, Kunststoffe und Metall eignen.

Gegenstand der vorliegenden Erfindung sind strahlungshärtbare wäßrige Beschichtungs-Zusammensetzungen mit einem Gehalt an Epoxyacrylaten (E), wobei diese Zusammensetzungen dadurch erhältlich sind, daß man
(A) bei 20 °C in wässrigen Systemen selbstdispergierende Epoxidharze, wie im vorliegenden Anspruch 1 beschrieben, mit
(B) Acryl- und/oder Methacrylsäure umsetzt,
und die dabei erhaltenen Epoxyacrylate (E) anschließend in einem wässrigen System dispergiert,
mit der Maßgabe, daß die Umsetzung zwischen den Komponenten (A) und (B) so geführt wird, daß die in Komponente (A) vorhandenen Epoxidgruppen vollständig durch die in Komponente (B) vorhandenen Carboxylfunktionen ringgeöffnet werden.

Die vorliegende Erfindung unterscheidet sich von der oben zitierten WO 02/85997, bei der man selbstdispergierende Epoxidharze gemeinsam mit (Meth)acrylsäureestern von Polyolen als Beschichtungszusammensetzung einsetzt. In den wässrigen Dispersionen gemäß WO 02/85997 liegen mithin keine Epoxyacrylate vor, sondern - und zwar nebeneinander - Epoxidharze und Polyol-(Meth)acrylsäureester. Eine Vernetzung geschieht erst durch Zugabe eines Härters. Der (aminische) Härter reagiert dabei zum einen mit den C=C-Doppelbindungen des Photomers im Sinne einer Michael-Addition (schnellere Reaktion), er reagiert zum anderen mit den Epoxygruppen des Epoxidharzes (langsamere Reaktion). Insgesamt erfolgt eine komplexe Vernetzung, wobei zu betonen ist, daß es sich nicht um eine Strahlungshärtung handelt, sondern um eine chemische Vernetzung mittels eines (aminischen) Härters. Die geschilderten Zusammenhänge gehen aus der Beschreibung der WO 02/85997 klar hervor, insbesondere sei auf den Beispielteil verwiesen: In Beispiel 1 wird Waterpoxy^{®} 1422 (selbstdispergierendes Epoxidharz) mit Photomer^{®} 4017 (Hexandioldiacrylat) gemischt. In Beispiel 2 wird dann geschildert, wie zur wässrigen Dispersion gemäß Beispiel 1 Waterpoxy^{®} 751 (ein aminischer Härter) zugegeben und ausgehärtet wird.

### Zu Komponente (A)

Bei Komponente (A) handelt es sich um in wässrigen Systemen bei 20 °C selbstdispergierende Epoxidharze. Unter dem Begriff "selbstdispergierend" ist zu verstehen, daß die entsprechenden Verbindungen spontan, also ohne die Zuhilfenahme oder Mitwirkung spezieller Emulgatoren, Dispergatoren und dergleichen, zu Dispersionen bzw. Emulsionen führen, wenn sie mit wässrigen Systemen in Kontakt gebracht werden. Der Begriff "wässrige Systemen" umfaßt dabei einerseits Wasser als solches, dann aber auch Wasser mit einem Gehalt von bis zu 10 Gew.-% an in Wasser löslichen niedermolekularen alkoholischen Co-Lösungsmitteln, etwa Ethoxypropanol.

Der Eindeutigkeit halber sei darauf hingewiesen, daß die direkten Umsetzungsprodukte von Bisphenol-A und/oder Bisphenol-F mit Epichlorhydrin nicht unter die Definitinon der Komponente (A) fallen, weil diese Verbindungen nicht in Wasser selbstdispergierend sind.

Vorzugsweise setzt man im Rahmen der vorliegenden Verbindung bei der Herstellung der Epoxyacrylate (E) solche Verbindungen (A) ein, die dadurch in wässrigen Systemen selbstdispergierend sind, daß sie Polyalkylenoxidbausteine (PAO-Bausteine) enthalten.

Man setz als Verbindungen, die im Rahmen der vorliegenden Erfindung als PAO-Bausteine für die Komponente (A) benutzt werden, Substanzen der allgemeinen Struktur R¹-O-R²-CH₂CH(R³)-NH₂ ein. Darin bedeuten:
- R¹ eine einwertige organische Gruppe mit 1-12 C-Atomen, die aliphatisch, cycloaliphatisch oder aromatisch sein kann
- R² eine Polyoxyalkylengruppe, die aus 5-200 Polyoxyalkyleneinheiten, insbesondere EO-und/oder PO-Einheiten, aufgebaut ist
- R³ Wasserstoff oder ein aliphatischer Rest mit bis zu 4 C-Atomen.

Die Verbindungen, die ihm Rahmen der vorliegenden Erfindung als PAO-Bausteine für die Komponente (A) benutzt werden, sind die dem Fachmann bekannten "Jeffamine", bei denen es sich um handelsübliche Substanzen handelt. Beispielhaft sei hier "Jeffamin® 2070" genannt. Die mittleren Molgewichte (Zahlenmittel; Mn) der Verbindungen, die im Rahmen der vorliegenden Erfindung als PAO-Bausteine für die Komponente (A) benutzt werden, liegen im Bereich zwischen 400 und 2000.

Beispiele für geeignete Verbindungen (A) sind Verbindungen, wie sie gemäß der Offenbarung der WO-A-95/18165durch Reaktion eines Epoxidharzes mit Mono-, Di-, oder Polyalkylenaminen bzw. gemäß WO-A-96/20970 durch Reaktion eines Epoxidharzes mit polyfunktionellen Phenolen und Amin-Epoxidaddukten entstehen. Weitere Beispiele für geeignete Verbindungen A) sind die selbstdispergierenden Epoxidharze gemäß der Offenbarung der WO-A-00/02944 und WO-A-00/02945**.**

### Zur Herstellung der Epoxyacrylate

Die erfindungsgemäßen Epoxyacrylate (E) werden wie bereits gesagt durch Umsetzung von bei 20 °C in wässrigen Systemen selbstdispergierenden Epoxidharzen (A) mit Acryl-und/oder Methacrylsäure (B) hergestellt, wobei die Umsetzung zwischen den Komponenten (A) und (B) so geführt wird, daß die in Komponente (A) vorhandenen Epoxidgruppen vollständig durch die in Komponente (B) vorhandenen Carboxylfunktionen ringgeöffnet werden. Der Prozeß der Acrylierung unterliegt dabei an sich keinen besonderen Beschränkungen und kann nach allen dem Fachmann einschlägig bekannten Methoden erfolgen. Gewünschtenfalls kann ein Katalysator eingesetzt werden. Es kann ebenfalls gewünscht sein, die Acrylierung unter Bedingungen durchzuführen, die gewährleisten, daß eine Polymerisation der Komponente (B) unterbunden wird. Auch diesbezüglich kann auf alle dem Fachmann einschlägig bekannten Methoden zurückgegriffen werden.

### Zur Herstellung der wässrigen Dispersionen

Die erfindungsgemäßen Epoxyacrylate (E) werden in einem wässrigen System dispergiert. Hierzu kann an sich auf alle dem Fachmann einschlägig bekannten Methoden zurückgegriffen werden. Insbesondere können die Epoxyacrylate (E) zunächst bei erhöhter Temperatur anteilig mit Wasser versetzt, das System intensiv durchmischt und dann abgekühlt werden, wobei eine Emulsion bzw. Dispersion entsteht, die anschließend mit der gewünschten Restmenge an Wasser bei moderaten Temperaturen versetzt wird.

### Verwendung

Ein weiterer Gegenstand der Erfindung ist die Verwendung der wie oben beschrieben erhältlichen wässrigen Dispersionen von Expoxyacrylaten (E) als strahlungshärtbare Massen für Beschichtungssysteme wie Lacke, Beschichtungsmassen und dergleichen. Die wässrigen Dispersionen der Expoxyacrylate (E) können - gegebenenfalls unter Mitverwendung geeigneter Additive - zur Beschichtung einer Vielzahl von Substraten eingesetzt werden, beispielsweise Glas, Metall, Holz, Papier, Keramik und Kunststoff. Hinweise zur Formulierung wäßriger Epoxyacrylate finden sich z. B. in: R. Höfer, H.-G. Schulte, C. Galopin, G. Félix, *Additifs pour la synthese et la formulation des peintures à l'eau,* Double Liaison, 531, 29 (1/2003) oder in R. Höfer, T. Roloff, H.-G. Schulte, *Sustainable development by new additives and resin systems,* ECJ 34 (09/2003).

Insbesondere eignen sich die wässrigen Dispersionen der Expoxyacrylate (E) zur Be-schichtung von Holz, sowohl als Primer als auch als Topcoat. Generell wurde eine ausgezeichnete Haftung auf Holz festgestellt. Als Topcoat zeichnen sie sich außerdem durch sehr hohen Glanz und gute chemische Resistenz (zum Beispiel gegen Essigsäure, Zitronensäure und Ethanol), ferner durch gute Kratz- und Abriebfestigkeit aus.

### Beispiele

### Beispiel 1

577,94 g Chem Res^{®} E20 (bei 20 °C flüssiges unmodifiziertes Bisphenol-A-Harz; Handelsprodukt der Fa. Cognis GmbH und Co. KG) und 0,88 g eines Umsetzungsproduktes von propyxyliertem Pentraerythritol mit Epichlorhydrin wurden unter Stickstoff in einen Reaktor gegeben und vermischt.

Anschließend wurden 141,56 g Jeffamin^{®} M-2070 (handelsübliches Polyetheramin der Firma Huntsman), 158,99 g Bisphenol-A und 0,63 g Triphenylphosphin zugegeben und die Mischung auf eine Temperatur von 140 °C gebracht. Es setzte eine exotherme Reaktion ein und die Temperatur wurde 30 Minuten im Bereich von 165 bis 170 °C gehalten. Dann wurde auf 130 °C gekühlt und 120,0 g Ethoxypropanol zugefügt und gut gemischt. Die hierbei erhaltene Mischung wurde in Beispiel 2 eingesetzt.

### Beispiel 2

88,72 g der gemäß Beispiel 1 erhaltenen Mischung wurden zusammen mit 0,25 g 4-Methoxyphenol in einen Glaskolben mit Gaseinleitungsrohr, Rührer und Rückfluss-kühler gefüllt. Anschließend wurde unter Durchleiten von Luft (3,5 kg/Stunde) auf 90 °C erhitzt und bei dieser Temperatur unter Rückfluß gehalten. Nun wurde innerhalb von 30 Minuten eine Mischung von 10,53 g Acrylsäure und 0,5 g Triphenylphosphin zugegeben, während die Mischung bei 90 °C gehalten wurde. Anschließend ließ man 16 Stunden nachreagieren. Während der gesamten Zeit wurde das Durchleiten von Luft (siehe oben) aufrechterhalten. Das erhaltene Produkt wurde anschließend auf 80 °C abgekühlt und dann unter kräftigem Rühren mit 30 g Wasser versetzt. Dabei sank die Viskosität der Mischung. Nun wurde auf 45 °C abgekühlt und 30 Minuten bei dieser Temperatur gehalten, wobei eine Emulsion entstand. Schließlich wurden weitere 70 g Wasser langsam zugegeben. Es wurde eine wässrige Epoxyacrylat-Dispersion erhalten.

## Patentansprüche

1. Strahlungshärtbare wäßrige Beschichtungs-Zusammensetzungen mit einem Gehalt an Epoxyacrylaten (E), wobei diese Zusammensetzungen dadurch erhältlich sind, dass man (A) bei 20 °C in wässrigen Systemen selbstdispergierende Epoxidharze mit (B) Acryl-und/oder Methacrylsäure umsetzt, und die dabei erhaltenen Epoxyacrylate (E) anschließend in einem wässrigen System dispergiert, mit der Maßgabe, dass die Umsetzung zwischen den Komponenten (A) und (B) so geführt wird, dass die in Komponente (A) vorhandenen Epoxidgruppen vollständig durch die in Komponente (B) vorhandenen Carboxylfunktionen ringgeöffnet werden, mit der Maßgabe, dass die Epoxidharze (A) Polyalkylenoxidbausteine enthalten, wobei diese Polyalkylenoxidbausteine die allgemeine Struktur (I)
R¹-O-R²-CH₂CH(R³)-NH₂ (I)
aufweisen, wobei R¹ eine einwertige organische Gruppe mit 1-12 C-Atomen, die aliphatisch, cycloaliphatisch oder aromatisch sein kann, R² eine Polyoxyalkylengruppe, die aus mindestens 5 Polyoxyalkyleneinheiten, insbesondere EO- und/oder PO-Einheiten, aufgebaut ist und R³ Wasserstoff oder ein aliphatischer Rest mit bis zu 4 C-Atomen bedeuten,
wobei die in den Epoxidharzen (A) enthaltenen Polyalkylenoxidbausteine mit der allgemeinen Struktur (I) ausgewählt werden aus der Gruppe der Jeffamine und ein mittleres Molgewicht (Zahlenmittel; Mn) zwischen 400 und 2000 aufweisen.

2. Verwendung der Zusammensetzungen gemäß Anspruch 1 als Primer für die Beschichtung von Holz.

3. Verwendung der Zusammensetzungen gemäß Anspruch 1 als Topcoat für die Beschichtung von Holz.

## Claims

1. Radiation-curable aqueous coating compositions having a content of epoxy acrylates (E), wherein these compositions are obtainable by reacting (A) epoxy resins that are self-dispersing in aqueous systems at 20 °C with (B) acrylic and/or methacrylic acid and subsequently dispersing the epoxy acrylates (E) thus obtained in an aqueous system, with the proviso that the reaction between components (A) and (B) is conducted in such a way that the epoxide groups present in component (A) are fully ring-opened by the carboxyl functions present in component (B), with the proviso that the epoxy resins (A) contain polyalkylene oxide building blocks, wherein these polyalkylene oxide building blocks (I) have the general structure (I)
R¹-O-R²-CH₂CH(R³)-NH₂ (I)
wherein R¹ is a monovalent organic group containing 1-12 carbon atoms, which may be aliphatic, cycloaliphatic or aromatic, R² is a polyoxyalkylene group made up of at least 5 polyoxyalkylene units, more particularly EO and/or PO units, and R³ is hydrogen or an aliphatic group containing up to 4 carbon atoms,
wherein the polyalkylene oxide building blocks having the general structure (I) contained in the epoxy resins (A) are selected from the group of Jeffamines and have an average molecular weight (number average; Mn) between 400 and 2000.

2. Use of the compositions according to claim 1 as a primer for coating wood.

3. Use of the compositions according to claim 1 as a topcoat for coating wood.

## Revendications

1. Compositions de revêtement aqueuses durcissables par rayonnement ayant une teneur en acrylates d'époxyde (E), lesdites compositions pouvant être obtenues en faisant réagir (A) des résines époxyde auto-dispersables dans des systèmes aqueux à 20 °C avec (B) de l'acide acrylique et/ou méthacrylique, et ensuite disperser les acrylates d'époxyde (E) ainsi obtenus dans un système aqueux, à condition que la réaction entre les composants (A) et (B) soit effectuée de telle manière que les groupes époxyde présents dans le composant (A) soient soumis à une ouverture de cycle complète par les fonctions carboxyle présentes dans le composant (B), , à condition que les résines époxyde (A) contiennent des éléments constitutifs de polyoxyalkylène, ces éléments constitutifs de polyoxyalkylène ayant la structure générale (I)
R¹-O-R²-CH₂CH(R³)-NH₂ (I)
R¹ étant un groupe organique monovalent contenant 1 à 12 atomes de carbone, lequel peut être de nature aliphatique, cycloaliphatique ou aromatique, R² étant un groupe polyoxyalkylène composé d'au moins 5 unités de polyoxyalkylène, plus particulièrement d'unités EO et/ou PO, et R³ étant l'hydrogène ou un groupe aliphatique contenant jusqu'à 4 atomes de carbone,
les éléments constitutifs de polyoxyalkylène ayant la structure générale (I), contenus dans les résines époxyde (A), étant choisis dans le groupe des Jeffamines et ayant une masse moléculaire moyenne (moyenne en nombre ; Mn) comprise entre 400 et 2000.

2. Utilisation de compositions selon la revendication 1 comme apprêt pour le revêtement du bois.

3. Utilisation de compositions selon la revendication 1 comme couche de finition pour le revêtement du bois.
